(19) **Europäisches Patentamt**

**European Patent Office**

**Office européen des brevets**

(11) **EP 1 405 709 A1**

(12) **EUROPEAN PATENT APPLICATION**

(43) Date of publication:
07.04.2004 Bulletin 2004/15

(51) Int Cl.7: **B29C 45/76**

(21) Application number: 03256182.1

(22) Date of filing: 30.09.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 02.10.2002 JP 2002289939

(71) Applicant: **FANUC LTD**
**Minamitsuru-gun, Yamanashi 401-0597 (JP)**

(72) Inventor: **Watanabe, Hiroshi**
**Fujiyoshida-shi, Yamanashi, 403-0004 (JP)**

(74) Representative: **Billington, Lawrence Emlyn**
**Haseltine Lake,**
**Imperial House,**
**15-19 Kingsway**
**London WC2B 6UD (GB)**

(54) **Injection molding machine with clamping force control**

(57)     A peak current value of a mold clamping servomotor (8) driving a toggle type mold clamping apparatus (6) during mold clamping is proportional to a mold clamping force. A peak current value is obtained every predetermined number of molding cycles during automatic operation and a difference between the obtained peak current value and a reference peak current value is obtained. An amount of change in a mold clamping force and an adjustment amount of a rear platen (2) are determined according to the difference. The rear platen (2) is moved on the basis of the adjustment amount and control is made so as to attain a set mold clamping force.

FIG. 1

**Description**

The present invention relates to an injection molding machine, and in particular to an injection molding machine having a toggle type mold clamping apparatus.

In a toggle type mold clamping apparatus, a toggle mechanism is disposed between a movable platen mounted with a movable side mold and a rear platen, and the movable platen is moved toward a stationary platen mounted with a fixed side mold by driving the toggle mechanism so that the movable side mold and the fixed side mold are caused to abut on each other. Further, such a constitution is employed that a mold clamping force is generated by driving the toggle mechanism to stretch tie bars for coupling the movable platen and the rear platen and a set mold clamping force can be obtained in a lockup state where a toggle link has been stretched up to a predetermined position.

Therefore, it is necessary to adjust a position of the rear platen (a distance between the stationary platen and the rear platen) according to a thickness of the mold and a mold clamping force to be set and to make adjustment (a mold thickness adjustment) so as to obtain a set mold clamping force when the toggle mechanism has been locked up.

In an injection molding machine using the toggle type mold clamping apparatus, various kind of methods for setting a mold clamping force automatically have been already developed (for example, refer to Japanese Patent No. 2620108). However, these methods are constituted such that a mold clamping force is set at a condition setting time before an automatic operation is performed in an injection molding machine, such as after mold exchange has been conducted, or after an automatic operation is interrupted in order to perform an adjusting work for a mold clamping force.

In an injection molding machine, since resin with a high temperature is injected into molds during an automatic operation, the temperature of the mold rises so that the molds expand. As a result, since the mold clamping force fluctuates, it is necessary to adjust the mold clamping force. In such a case, it is conventionally implemented to stop an automatic operation once to adjust the mold clamping force. A method where a temperature sensor for a mold is additionally provided and a mold clamping force is corrected so as to correspond to a mold temperature has been also proposed (refer to JP No. H5-2Q0812A and JP No. H4-103311A, for example). Furthermore, a method where a mold clamping force sensor or a strain sensor is additionally provided to detect an actual mold clamping force and a clamping force adjustment is conducted on the basis of a detection thereof has been proposed (refer to JP No. H7-118984B and JP No. S61-283518A, for example).

Further, in a hydraulic type injection molding machine, a method where a hydraulic pressure of a hydraulic cylinder for driving a toggle mechanism at a time of generation of a mold clamping force is measured, the measured hydraulic pressure is compared with a measured hydraulic pressure obtained after adjustment of the mold clamping force, and adjustment of the mold clamping force is conducted (refer to JP No. H7-137104A, for example), and a method where, when a pattern of a hydraulic pressure detected is different from a pattern at a normal time, abnormality is displayed (refer to JP No. S59-76653A) have been known. Further, a method where a driving force (a hydraulic pressure) for driving a toggle mechanism during molds closed is measured, and when the driving force measured exceeds a predetermined range, a mold clamping force is adjusted by adjusting a position of a rear platen (refer to JP No. S50-2370B, for example) has been also known.

In the toggle type mold clamping apparatus, adjustment is conducted such that a set mold clamping force is generated in a state where a toggle link has been stretched up to a predetermined position. In an injection molding machine where the toggle type mold clamping apparatus is driven by a servomotor to conduct:mold clamping, the mold clamping is conducted by detecting a state of the toggle mechanism on the basis of a rotational position of the servo-motor or the like to perform position control so as to attain a lock up position. On the other hand, since resin with a high temperature is injected into the molds, the temperature of the molds rises so that the thickness of the mold fluctuates. As a result, since the mold clamping operations is controlled by position control, even if control to the same position (the lockup position) is performed, a mold clamping force is changed by a magnitude corresponding to the fluctuation of the thickness of the molds.

A first aspect of an injection molding machine according to the present invention comprises a toggle type mold clamping apparatus which is disposed between a movable platen mounted with a movable side mold and a rear platen and which moves the movable platen forward and rearward by a servomotor for a mold clamping; and mold clamping force adjusting means which adjusts a position of the rear platen according to a difference between a mold clamping force obtained by measurement every predetermined number of molding cycles,or an average of such mold clamping forces,and a predetermined reference mold clamping force.

The injection molding machine according to this aspect can take the following embodiments.

The reference mold clamping force may be a value acquired by performing one molding cycle or an average value of a plurality of mold clamping forces acquired by performing a plurality of molding cycles.

The mold clamping force may be a load of a mold clamping servomotor (for example, a current value) obtained by measurement during a mold clamping or obtained by measurement during at a time of mold unclamping.

An alarm may be outputted when an adjustment amount of the position of the rear platen or the accumulation of such adjustment amounts exceeds a predetermined adjustment amount.

Further, a second aspect of an injection molding machine according to the present invention comprises a toggle type mold clamping apparatus which is disposed between a movable platen mounted with a movable side mold and a rear platen and which moves the movable platen forward and rearward by a servomotor for a mold clamping; and mold clamping force adjusting means which adjusts a position of the rear platen according to a difference between a load of the mold clamping servomotor obtained by measurement every predetermined number of molding cycles,or an average of such loads,and a predetermined reference load of the mold clamping servomotor.

The injection molding machine according to this aspect can take the following embodiments.

The reference load of the mold clamping servomotor may be a load acquired by performing one molding cycle, or an average of a plurality of loads acquired by performing a plurality of molding cycles.

The load of the mold clamping servomotor may be a load applied to the mold clamping servomotor during mold clamping or at a time of mold unclamping.

The load applied to the mold clamping servomotor may be detected from a current value of the mold clamping servomotor, or may be detected by an observer provided on the mold clamping servomotor.

An alarm may be outputted when an adjustment amount of a position of the rear platen or the accumulation of such adjustment amounts exceeds a predetermined adjustment amount.

According to an embodiment of the present invention, in an injection molding machine using a toggle type mold clamping apparatus driven by a servo motor, fluctuation of a mold clamping force during automatic operation thereof is suppressed so that a stable mold clamping force can be obtained.

The above-described and other features of embodiments of the invention will be apparent from the description of the following embodiments with reference to the drawings, in which:

Fig. 1 is a schematic diagram of an injection molding machine according to one embodiment of the present invention;

Fig. 2 is a diagram showing measured values of a driving current of a mold clamping servomotor used in the injection molding machine shown in Fig. 1, obtained when a mold closing operation, a mold clamping operation and a mold opening operation are conducted by the servo motor;

Fig. 3 is a graph showing a relationship between a peak current value of a driving current of a mold clamping servomotor during mold clamping and a generated mold clamping force;

Fig. 4 is a flowchart for explaining a mold clamping force adjustment processing in the injection molding machine shown in Fig. 1;

Fig. 5 is a flowchart continuing from the flowchart shown in Fig. 4;

Fig. 6 is a graph showing a relationship among a mold temperature, a peak current value and a mold clamping force in an injection molding machine to which the present invention is not applied; and

Fig. 7 is a graph showing a relationship among a mold temperature, a peak current value and a mold clamping force in an injection molding machine to which the present invention is applied.

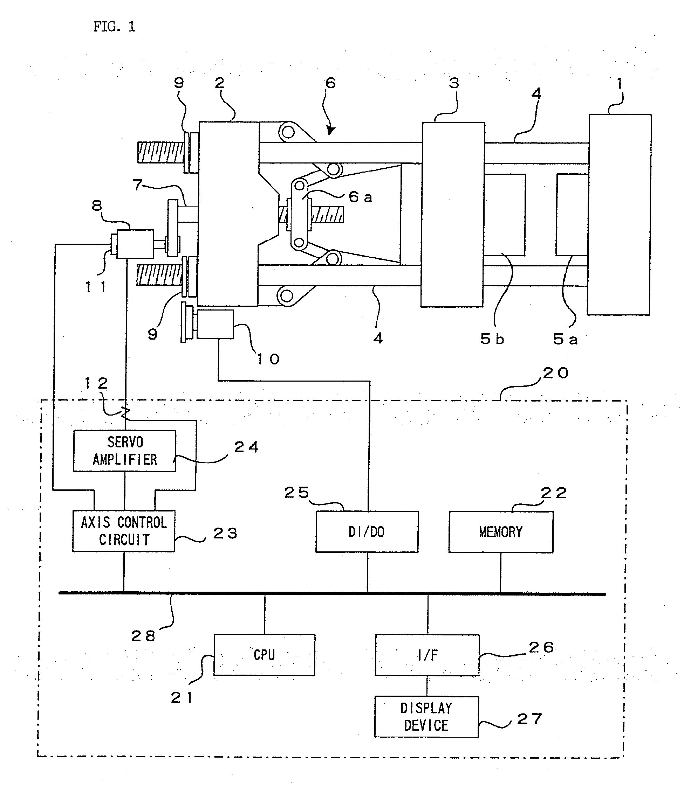

Fig. 1 is a schematic diagram of a main portion of one embodiment of the present invention. A stationary platen 1 and a rear platen 2 are connected to each other by a plurality of tie bars 4. A movable platen 3 is arranged between the stationary platen 1 and the rear platen 2 so as to be movable along the tie bars 4. Further, a fixed side mold 5a is mounted to the stationary platen 1, and a movable side mold 5b is mounted to the movable platen 3.

A toggle mechanism 6 is arranged between the rear platen 2 and the movable platen 3, and a nut provided on a cross head 6a of the toggle mechanism 6 is screwed to a ball screw 7 mounted to the rear platen 2 to be rotatable but unmovable in an axial direction of the ball screw 7. A toggle type mold clamping device is constituted such that opening, closing and mold clamping operations of the molds 5a and 5b are conducted by driving the ball screw 7 by a mold clamping servomotor 8 via a power transmission mechanism to move the movable platen 3 toward or away from the stationary platen 1. Incidentally, a position/speed detector 11 detecting rotational position/speed of the servo motor such as an encoder or the like is mounted, to the mold clamping servomotor 8, so that a position of the cross head 6a, i.e., a position of the movable platen 3 (the movable side mold 5b) can be detected.

Further, such a constitution is employed that end portions of the tie bars 4 are threaded and the nuts 9 screwed to the threaded portions are rotationally driven via a power transmission mechanism (not shown) by a mold clamping force adjusting motor 10 so that the rear platen 2 can be advanced and retreated along the tie bars 4, and mold clamping force adjusting means is constituted with the mold clamping force adjusting motor 10, the nuts 9 and the like.

Reference numeral 20 denotes a controller for controlling the injection molding machine, and only a main portion of the controller is described in Fig. 1. A memory 22 comprising a ROM, a RAM and the like, an axis control circuit 23 for controlling a position, a speed and a current (a torque) of the servo motor, an input/output circuit 25 and an interface 26 are connected to a processor 21 for controlling the whole of the injection molding machine via a bus 28.

The axis control circuit 23 comprises a processor, a memory, an interface and the like. A position/speed feedback signal from the position/speed detector 11 mounted to the mold clamping servomotor is fed back to the axis control circuit 23, and a current feedback signal from a current detector 12 for detecting a driving current for driving the mold clamping servomotor 8 is fed back thereto. The mold clamping servomotor is connected to the axis control circuit 23 via a servo amplifier 24. Furthermore, the mold clamping force adjusting motor 10 is connected to the input/ output circuit 25 and a display device 27 is connected to the interface 26.

A program for controlling the injection molding machine is stored in the memory 22, and the processor 21 controls the injection molding machine on the basis of the program. Regarding the mold clamping operation, the processor 21 outputs a movement instruction to the axis control circuit 23 on the basis of the program. The processor of the axis control circuit 23 performs feedback control on a position, a speed and a current on the basis of a received movement instruction, a position/speed feedback signal from the position/speed detector 11, and a current feedback signal from the current detector 12, and it controls driving of the mold clamping servomotor 8 via the servo amplifier 24.

According to drive of the mold clamping servomotor 8, the ball screw 7 is rotated, the cross head 6a of the toggle mechanism having the nut screwed to the ball screw 7 is moved along the ball screw 7, the toggle mechanism 6 is driven, and the movable platen 3 is advanced or retracted so that a mold opening, a mold closing and a mold clamping of the molds 5a and 5b are conducted.

The position of the rear platen 2 is adjusted by the mold clamping force adjusting motor 10 such that, when the movable platen 3 is advanced by the toggle mechanism 6 to cause the movable side mold 5b to abut on the fixed side mold 5a and the movable platen 3 is further advanced to reach a lockup position, a predetermined mold clamping force is generated. That is, when the movable side mold 5b is caused to abut on the fixed side mold 5a and the movable platen 3 and the movable side mold 5b are advanced, the tie bars are stretched. This is because the stationary platen 1 and the rear platen 2 are coupled to each other by the tie bars 4. A mold clamping force can be obtained due to a reaction force against stretching of the tie bars 4, and the position of the rear platen 2 is adjusted such that when the toggle link is stretched up to its limit so that the tie bars are stretched up to the maximum, the set mold clamping force can be obtained.

For this reason, when the molds 5a and 5b are exchanged to other molds, the thickness of the molds is varied. Therefore, when the mold clamping force is changed, the position of the rear platen 2 must also be changed. In such a case, the processor 21 drives the mold clamping force adjusting motor 10 via the input/output circuit 25 and rotates the nuts 9 via the power transmission mechanism to change the position of the rear platen 2 thereby perform adjustment of the mold clamping force.

The constitution, function and operation of the toggle type mold clamping apparatus of the injection molding machine described above are the same as those of a toggle type mold clamping apparatus of a conventional injection molding machine and known in this technical field. The present invention is to suppress fluctuation of a mold clamping force due to thermal expansion of the molds 5a and 5b or the like during an automatic operation of the injection molding machine to obtain a stable mold clamping force.

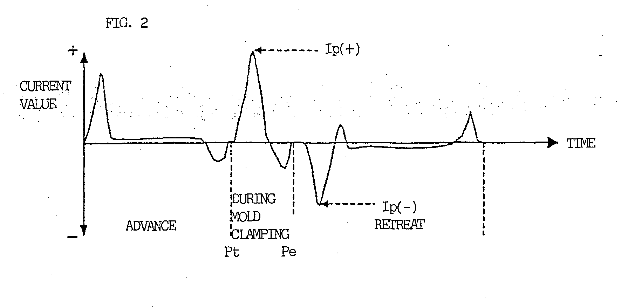

Fig. 2 is a diagram showing measured values of a driving current of the mold clamping servomotor 8 detected by the current detector 12 when a mold closing operation, a mold clamping operation and a mold opening operation are conducted by driving the mold clamping servomotor 8.

Since it is necessary to accelerate the movable platen 3 and the movable mold 5b up to a predetermined speed when the mold closing operation is started, driving current is increased due to acceleration, and when reaching the predetermined speed, a load applied to the mold clamping servomotor 8 becomes approximately only a frictional force, which results in lowering of a driving current. Then, since the mold clamping servomotor 8 is decelerated just before a mold touch position Pt where the movable side mold 5b comes into contact with the fixed side mold 5a, a reverse current (a negative current) is caused to flow due to the deceleration so that the molds 5a and 5b are brought into contact with each other in the decelerated state.

Since the movable platen 3 is advanced while the tie bars 4 are being stretched in a range from the mold touch position Pt where the molds 5a and 5b come into contact with each other, the driving current flowing in the mold clamping servomotor 8 is increased. As the result of stretching of the link of the toggle mechanism 6, the degree of the reaction force against the stretching of the tie bars 4 received by the link of the toggle mechanism 6 is increased, so that the load received by the mold clamping servomotor 8 is decreased and the driving current is reduced. The mold clamping servomotor 8 is decelerated just before the movable mold reaches a position (a position to be positioned) where the set mold clamping force can be obtained so that a reverse current flows. At a lockup position Pe where the link of the toggle mechanism 6 is stretched so that the set mold clamping force can be obtained, the reaction force due to the stretching of the tie bars 4 is received by the toggle mechanism 6 and hardly acts on the mold clamping servomotor 8, with the result that the driving current flowing in the servo-motor becomes almost zero.

At a time of mold opening, since it is necessary to release the toggle mechanism 6 from its lockup state and accelerate the movable platen 3 and the movable side mold 5b in a mold opening direction, a large negative currents flows in the servo-motor 8. However, when the toggle mechanism 6 is released from the lockup state, the reaction force generated due to stretching of the tie bars 4 acts on the movable platen 3 and the movable side mold 5b, so that they are retracted at the set speed or faster. For this reason, a reverse current (plus current) flows so as to return the speed to the set speed, and thereafter a driving current generating a torque against a frictional force flows. At a position of completion of mold opening, a current flows in plus direction which generates a reverse torque for stopping the mold opening so that the mold opening operation is terminated.

As described above, in the steps of the mold closing, the mold clamping and the mold opening, a pattern of the driving current flowing in the mold clamping servomotor 8 shows a pattern as shown in Fig. 2.

A peak current value Ip(+) in a mold clamping direction (a plus direction) corresponding to a load applied to the mold clamping servomotor 8, generated during mold clamping from the mold touch position Pt to the lockup position Pe, varies depending on a mold clamping force generated. In order to generate a large mold clamping force, the stretching of the tie bars 4 must be increased and a corresponding large load is applied to the mold-clamping servo-motor 8, which results in increase in the peak current value Ip(+). Further, a peak current value Ip(-) in a mold opening direction (a minus direction), generated at a start time of mold opening, fluctuates depending on a mold clamping force being generated in the lockup state, since a current corresponding to a torque required for release from the lockup state is required.

This means that, if thickness of the molds 5a and 5b does not change and the mold clamping force generated does not change after the position of the rear platen is adjusted so that the set mold clamping force can be obtained according to the thickness of the molds used (or after a mold thickness adjustment), a load applied to the mold-clamping servo-motor 8 does not change and each of the peak current value Ip(+) and the peak current value Ip(-) described above does not change.

However, if the thickness of the molds 5a and 5b changes and the mold clamping force generated deviates from the set mold clamping force, which results in change in load, the peak current value Ip(+) and the peak current IP(-) also change. Therefore, by detecting the peak current value Ip(+) and the peak current value Ip(-) and confirming differences between these detected values and the peak current value Ip(+) and the peak current value Ip(-) when the set mold clamping force has been obtained, an amount of change in the mold clamping force generated is understood. This means that, when the position of the rear platen is adjusted on the basis of the change amount such that the set mold clamping force can be obtained, a stable set mold clamping force can always be obtained during an operation of the injection molding machine.

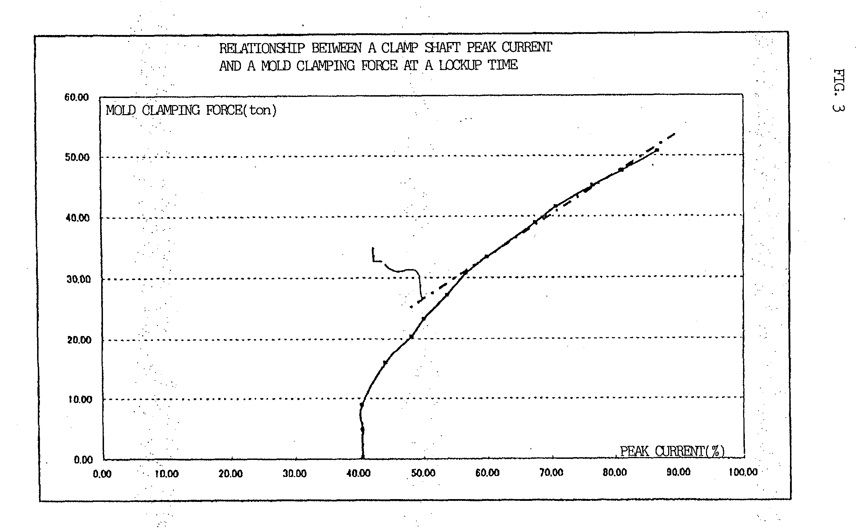

Fig. 3 is a graph showing a relationship between a generated mold clamping force and a peak current value Ip(+) during mold clamping which is obtained through an experiment, and indicates that the relationship between the generated mold clamping force and the peak current value Ip(+) can be approximated with a straight line L in a range from about 30 ton to about 50 ton of mold clamping force. Therefore, since the stretching of the tie bars 4 and the amount of change in the mold clamping force generated are proportioned to each other, an amount of adjustment movement of the rear platen 2 for holding the set mold clamping force can be obtained by multiplying a difference between the peak current value Ip(+) of a mold clamping force set as a reference value and a peak current value Ip(+) in any molding cycle during an operation by a predetermined proportional coefficient.

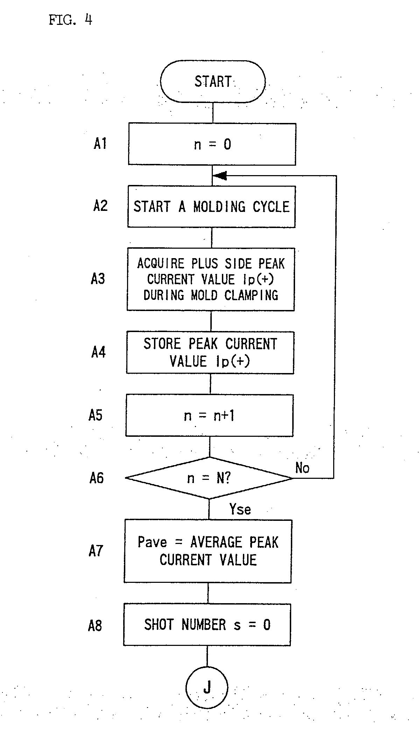

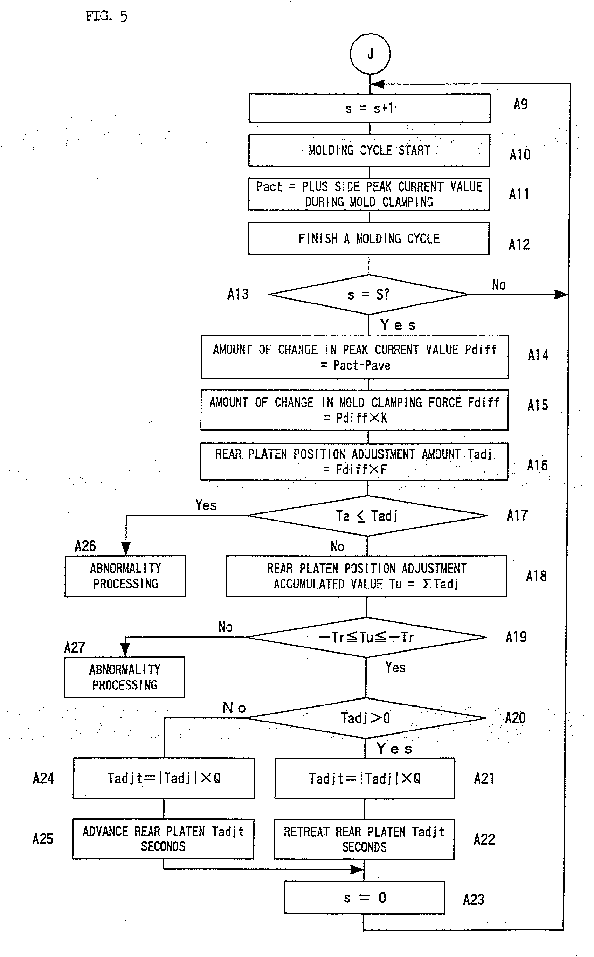

In the present embodiment, after adjustment is carried out such that the set mold clamping force can be obtained according to the thickness of the molds used (or after the mold thickness adjustment) , the processor 21 outputting an automatic operation instruction to the controller 20 starts processings shown in Fig. 4 and Fig. 5.

First, an index n is set to "0" (Step A1) , and a molding cycle is started (Step A2). From the drive current detected by the current detector 12, a peak current value Ip(+) during mold clamping is acquired and stored (Steps A3 and A4). Next, the index n is incremented by "1" (Step A5) , it is judged whether or not the index n reaches a set value N (Step A6), and a processing from Step A2 to Step A6 is performed until reaching the set value N so that N peak current values Ip(+) are stored. When the index n reaches the set value N, the stored N peak current values Ip(+) are added and the sum is divided by N to obtain an average value Pave and the average value Pave is used as reference peak current value (Step A7).

Next, after a counter s for counting a shot number (a molded number) is set to "0", "1" is added (Steps A8 and A9), a molding cycle starts (Step A10), and a peak current value Ip(+) is read during a mold clamping in the molding cycle so that the value is stored as a peak current value Pact in the present molding cycle (Step A11) . After the present molding cycle is completed (Step A12), judgment is made as to whether or not the value in the counter s has reached a set number S (Step A13). When the value has not reached the set number S yet, the control returns back to Step A9, from which a molding cycle is performed while updating the counter s, a peak current value Pact is obtained for each update and the processings from Step A9 to Step A13 are performed in a repeating manner until the value in the counter s reaches the set value S.

When the value in the counter s reaches the set value S, the S-th peak current value Pact is stored at this time. An amount of change Pdiff in the peak current value is obtained by subtracting the reference peak current value (an average value of the peak current value) Pave obtained in Step S7 from this peak current value Pact (Step A14). That is,

$$Pdiff = Pact - Pave \tag{1}$$

As shown in Fig. 3, since the peak current value and the mold clamping force are in a proportional relationship, the amount of change Fdiff in the mold clamping force is obtained by multiplying the amount of change Pdiff in the peak current value by the proportional coefficient K (Step A15), that is,

$$Fdiff = Pdiff \times K \tag{2}$$

Further, since the mold clamping force is generated by and proportional to the stretching of the tie bars 4, the adjustment amount (the movement amount) Tadj for adjusting the rear platen position is obtained by multiplying the amount of change in the mold clamping force by the proportional constant F (Step A16).

$$Tadj = Fdiff \times F \tag{3}$$

From the above-described Equation (2) and Equation (3),

$$Tadj = Fdiff \times F = Pdiff \times K \times F = Pdiff \times K' \tag{4}$$

is obtained. Therefore, the rear platen position adjustment amount Tadj may be obtained by omitting the processing in Step A15 and multiplying the amount of change Pdiff in the peak current value by the proportional constant K'.

Judgment is made as to whether or not the rear platen position adjustment amount Tadj thus obtained is equal to or more than a preset adjustment amount Ta (Step A17). In case of Ta $\leq$ Tadj, abnormality processing is performed and alarm or the like is displayed on the display device 27 to stop the molding operation (Step S26). This means that, in a case where mold clamping has been conducted with any foreign matter such as a molded product or the like placed between the fixed side mold and the movable side mold, a large mold clamping force is generated, and a large peak current value Pact is generated, so that the amount of change Pdiff (= Pact - Pave)in the peak current value and the rear platen position adjustment amount Tadj also become large. For this reason, when the rear platen position adjustment amount Tadj becomes equal to or more than the set adjustment amount Ta, abnormality processing is performed and alarm is displayed on the display device 27 or the like.

In case where the rear platen position adjustment amount Tadj has not reached the set adjustment amount Ta (or when Ta > Tadj), an accumulated value Tu is obtained by accumulating the rear platen position adjustment amounts Tadj (Step A18), and judgment is made as to whether or not the rear platen position adjustment amount Tadj is in a set range of -Tr to +Tr (Step A19) . This means that, since the rear platen 2 is moved on the basis of the rear platen position adjustment amount Tadj to perform mold clamping force adjustment, the rear platen position adjustment accumulated value Tu becomes large, which may cause a case where the rear platen 2 is drawn out from the tie bars 4 or a case where the toggle mechanism 6 interferes with another member. Therefore, in order to avoid such a case, judgment is made as to whether or not the accumulated adjustment amount Tadj is in the range of -Tr to +Tr, and when the amount Tadj exceeds the range, abnormality processing is performed and displaying of alarm or the like is carried out on the display device 27 or the like (Step A27).

When the rear platen position adjustment accumulated value Tu is in the set range of -Tr to +Tr, judgment is made as to whether or not the accumulated adjustment amount Tadj has a positive value (Step A20). When the amount Tadj has a positive value, a driving time Tadjt for the mold clamping force adjusting motor 10 is obtained by multiplying the rear platen position adjustment amount Tadj by a constant Q (Step A21) and the mold clamping force adjusting motor 10 is driven in a direction of a rear platen retreat via the input/output circuit 25 by the driving time Tadjt, so that the rear platen 2 is retreated (Step A22).

On the other hand, when the rear platen position adjustment amount Tadj has a negative value, the driving time Tadjt for the mold clamping force adjusting motor 10 is obtained by multiplying an absolute value of the rear platen position adjustment amount Tadj by the constant Q (Step A24) and the mold clamping force adjusting motor 10 is driven in a direction of a rear platen advance via the input/output circuit 25 by the driving time Tadj t so that the rear platen 2 is advanced (Step A25).

The counter s is set to "0" and the control returns back to Step A9. Thereafter, in a state where the automatic operation continues, the procossings of Step A9 and Steps subsequent thereto are executed. Each time when the number of molding cycles reaches the set number S, the peak current value Pact during mold clamping is obtained, so that the rear platen position adjustment is conducted and adjustment of the mold clamping force is carried out.

In the above-described embodiment, a reference peak current value is set using an average value Pave of N peak current values obtained during mold clamping in N molding operations after the mold thickness adjustment according to the processing of Step A1 to Step A7. Instead of this average value, a reference peak current value may be set using a peak current value Ip(+) obtained during any one mold clamping after adjustment has been made such that the set mold clamping force can be obtained according to the thickness of the used mold (or after the mold thickness adjustment) , and the amount of change Pdiff in the peak current value may be obtained in Step A14 by subtracting the detected peak current value Pact from this reference peak current value Ip(+).

Further, in the above-described embodiment, in the automatic operation, each time when the number of molding cycles reaches the set molding cycle number S, the peak current value Pact of the last molding cycle has been obtained, and the amount of change Pdiff in the peak current value, the amount of change Fdiff in the mold clamping force and the rear platen position adjustment amount Tadj have been obtained. However, instead of the peak current value Pact in the one last molding cycle, an average value of the set N peak current values Pact may be obtained. In this case, in the processing in Step A11, the peak current values Ip(+) detected are sequentially accumulated, and when the value of the counter s reaches the set value S in Step A13, the average value of the peak current values Ip (+) during mold clamping in S molding cycles is obtained by dividing the accumulated value by S and the average value thus obtained may be defined as Pact in Step A14.

In the above-described embodiment, since a motor whose positional control can not be performed is used as a mold clamping force adjustment motor, it is necessary to convert the rear platen position adjustment amount Tadj to the driving time as shown in the processings from Step A20 to A25. However, when such a measure is adopted that the mold clamping force adjustment motor is replaced by a servo-motor so as to allow its position control or a position detector such as an encoder or the like is added to an ordinary motor, the rear platen position adjustment amount Tadj obtained in Step A16 as well as a symbol may be instructed to the mold clamping force adjustment motor whose position control can be made, and a content of the processing from Step A20 to A25 is only changed to an instruction to output the rear platen position adjustment amount Tadj.

In the above-described embodiment, further, after adjustment has been made such that the set mold clamping force can be obtained according to the thickness of the used mold (or after the mold thickness adjustment), the peak current value serving as a reference value is obtained and an automatic operation is subsequently continued, but the processing for obtaining the peak current value serving as the reference value and the automatic operation processing may be conducted independently from each other. In this case, the processing from Step A1 to Step A8 in Fig. 4 may be a reference peak current value acquiring processing after adjustment has been made such that the set mold clamping force can be obtained according to the thickness of the mold to be used (or after the mold thickness adjustment) , and the processing from Step A9 to Steps subsequent thereto shown in Fig. 5 may be a processing during the automatic operation. Further, the processing for obtaining the peak current value serving as the reference value is not limited to a molding cycle, but it may be conducted by a manual mold opening/closing processing or a dry cycle.

In the above-described embodiment, the mold clamping adjustment is conducted using the peak current value Ip(+) which is the load during mold clamping, but the mold clamping adjustment may be conducted using the peak current value Ip(-) at a start time of mold opening, as described above. In this case, in Figs. 4 and 5, the peak current values detected in Steps A3 and A11 are only changed to the peak current values Ip(-) at the start time of mold opening, instead of the peak current values Ip(+).

In the above-described embodiment, the peak current value of the driving current corresponding to the load applied to the mold clamping servo-motor 8 is detected and the mold clamping force is obtained from the peak current value detected. Since the mold clamping force is obtained using the current detector provided for driving and controlling the mold clamping servo-motor 8, a special sensor for detecting a mold clamping force or the like is not required.

Furthermore, instead of obtaining the peak current value, a known observer is incorporated into the axis control circuit 23 for controlling the mold clamping servo-motor 8 and a load applied to the mold clamping servo-motor 8 is estimated and obtained by the observer, thereby obtaining a mold clamping force. In this case, also, the mold clamping force can be obtained by only adding software without loading hardware such as a special sensor or the like.

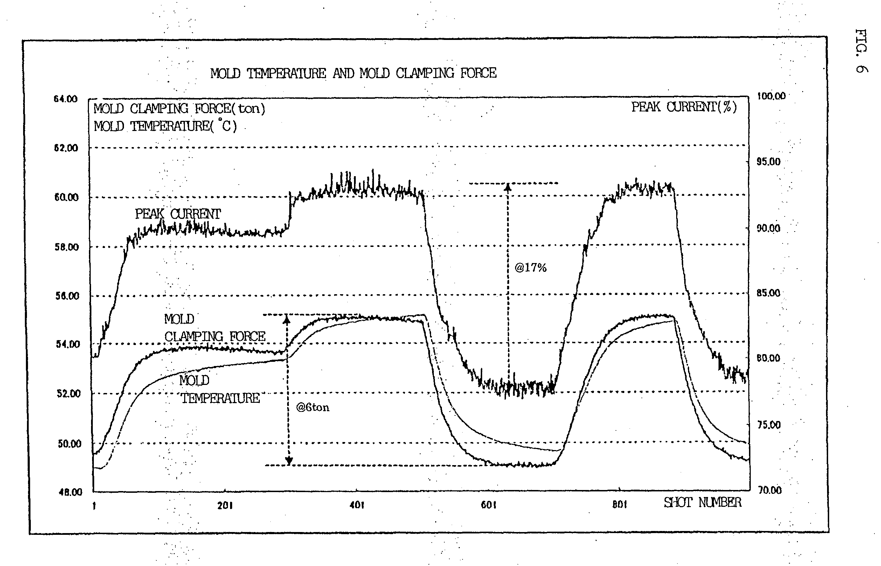

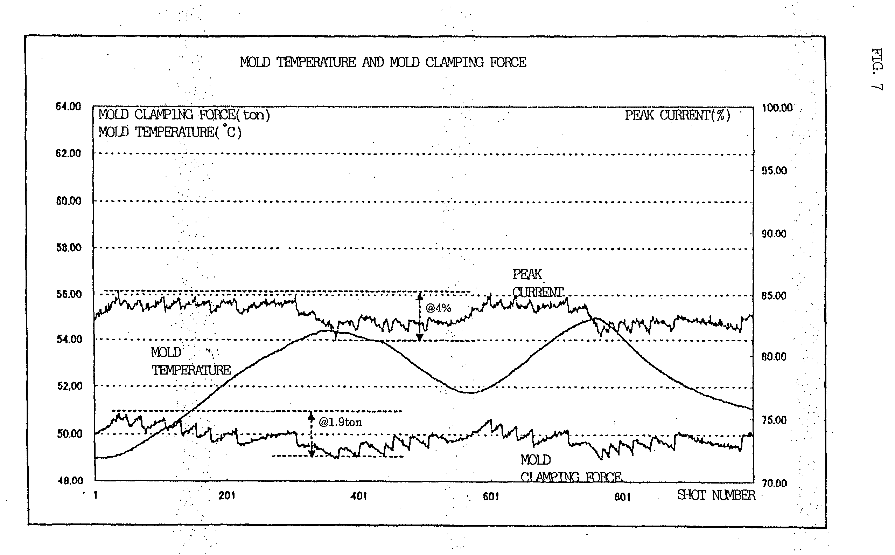

Fig. 6 and Fig. 7 are graphs showing relationships of mold temperatures, mold clamping forces and peak current values during mold clamping, measured while changing the mold temperature, when mold clamping force adjustment was performed by applying the present invention and when a mold clamping force adjustment was performed without applying the present invention, in order to confirm an advantageous effect of applying the present invention. Fig. 6 is a graph obtained when the mold clamping force adjustment was made without applying the present invention, and Fig. 7 is a graph obtained when the mold clamping force adjustment was made by applying the present invention. In the graphs, a horizontal axis shows a shot number (the number of molding cycles) and a vertical axis shows a mold clamping force, a mold temperature and a peak current value, where the left scale denotes a mold clamping force represented by a unit "ton" and a mold temperature represented by a unit "°C", and the right scale denotes a rate "%" of a peak current value measured when the maximum driving current of the mold clamping servo-motor is defined as 100.

In Fig. 6 where the present invention was not applied, when the mold temperature changed in a range of the maximum about 6°C, the peak current fluctuated in a rate of 17% and the mold clamping force fluctuated in a magnitude of 6 ton. On the other hand, in Fig. 7 where the mold clamping force adjustment was performed with application of the present invention, when the mold temperature was changed in a range of the maximum about 6°C, the peak current fluctuated in a range of 4% and the mold clamping force fluctuated in a magnitude of only 1. 9 ton. Thus, it will be understood that, according to the change in mold temperature, the peak current value and the mold clamping force varied largely in Fig. 6 where the present invention was not applied, while changes of the peak current value and the mold clamping force became small in Fig. 7 where the present invention was applied, thereby enabling a remarkable improvement to be achieved in the case applying the present invention.

When applying the present invention, fluctuation of a mold clamping force can be suppressed and a stable mold clamping force can be obtained even if a mold temperature is changed so that the thickness of a mold is changed. By restricting an adjustment range of a rear platen movement for automatic adjustment of a mold clamping force, interference of a toggle mechanism with another member and/or separation of a rear platen from a tie bars can be prevented. Further, where an adjustment amount is large, an alarm or the like can be generated assuming that abnormality has occurred. Moreover, a mold clamping force can be obtained without using special hardware.

**Claims**

1. An injection molding machine comprising a toggle type mold clamping apparatus which is disposed between a movable platen mounted with a movable side mold and a rear platen,and which moves the movable platen forward and rearward by a mold clamping servo-motor; and
mold clamping force adjusting means which adjusts a position of the rear platen according to a difference between a mold clamping force obtained by measurement every predetermined number of molding cycles,or an average of such mold clamping forces,and a predetermined reference mold clamping force.

2. The injection molding machine according to claim 1, wherein the reference mold clamping force is an average value of a plurality of mold clamping forces acquired by performing a plurality of molding cycles.

3. The injection molding machine according to claim 1 or 2, wherein the mold clamping force is a load applied to the mold clamping servomotor measured during mold clamping.

4. The injection molding machine according to claim 1,2,or 3, wherein the mold clamping force is a load applied to the mold clamping servomotor obtained by measurement conducted during mold clamping.

5. The injection molding machine according to claim 3 or 4, wherein the load of the mold clamping servomotor is detected on the basis of a current value of the mold clamping servomotor.

6. The injection molding machine according to claim 3 or 4, wherein the load of the mold clamping servomotor is detected by an observer provided to the mold clamping servo-motor

7. An injection molding machine comprising a toggle type mold clamping apparatus which is disposed between a movable platen mounted with a movable side mold and a rear platen,and which moves the movable platen forward and rearward by a mold clamping servo-motor; and
mold clamping force adjusting means which adjusts a position of the rear platen according to a difference between a load of the mold clamping servo motor obtained by measurement every predetermined number of molding cycles, or an average of such loads,and a predetermined reference load of the mold clamping servomotor.

8. The injection molding machine according to claim 7, wherein the reference load of the mold clamping servomotor is an average value of a plurality of mold clamping forces acquired by performing a plurality of molding cycles.

9. The injection molding machine according to claim 7 or 8, wherein the load of the mold clamping servomotor is a load applied to the mold clamping servomotor during mold clamping.

10. The injection molding machine according to claim 7 or 8, wherein the load of the mold clamping servomotor is a load applied to the mold clamping servomotor when the mold clamping force is unclamped.

11. The injection molding machine according to any of claims 7 to 10, wherein the load of the mold clamping servomotor is detected on the basis of a current value of the mold clamping servomotor.

12. The injection molding machine according to any of claims 7 to 10, wherein the load of the mold clamping servomotor is detected by an observer provided to the mold clamping servomotor.

13. The injection molding machine according to any preceding claim, wherein, when an adjustment amount of the position of the rear platen for one molding cycle or an accumulation of such adjustment amounts exceeds a predetermined adjustment amount, an alarm is outputted.

FIG. 1

EP 1 405 709 A1

FIG. 2

Ip(+)

CURRENT VALUE

TIME

DURING MOLD CLAMPING

ADVANCE

Ip(−)
RETREAT

Pt        Pe

11

RELATIONSHIP BETWEEN A CLAMP SHAFT PEAK CURRENT
AND A MOLD CLAMPING FORCE AT A LOCKUP TIME

FIG. 3

EP 1 405 709 A1

12

FIG. 4

```
                    ┌──────────┐
                    │  START   │
                    └──────────┘
                         │
   A1        ┌───────────────────────┐
             │        n = 0          │
             └───────────────────────┘
                         │
                         ▼◄─────────────────┐
   A2        ┌───────────────────────┐      │
             │  START A MOLDING CYCLE│      │
             └───────────────────────┘      │
                         │                   │
   A3        ┌───────────────────────┐      │
             │ ACQUIRE PLUS SIDE PEAK│      │
             │  CURRENT VALUE Ip(+)  │      │
             │ DURING MOLD CLAMPING  │      │
             └───────────────────────┘      │
                         │                   │
   A4        ┌───────────────────────┐      │
             │  STORE PEAK CURRENT   │      │
             │     VALUE Ip(+)       │      │
             └───────────────────────┘      │
                         │                   │
   A5        ┌───────────────────────┐      │
             │       n = n+1         │      │
             └───────────────────────┘      │
                         │                   │
   A6              ◇ n = N? ◇──── No ────────┘
                         │
                        Yse
   A7        ┌───────────────────────┐
             │  Pave = AVERAGE PEAK  │
             │    CURRENT VALUE      │
             └───────────────────────┘
                         │
   A8        ┌───────────────────────┐
             │   SHOT NUMBER s = 0   │
             └───────────────────────┘
                         │
                       ( J )
```

EP 1 405 709 A1

FIG. 5

```
                    ( J )

              ┌──────────────────────┐
              │      s = s+1          │  A9
              └──────────────────────┘
              ┌──────────────────────┐
              │  MOLDING CYCLE START  │  A10
              └──────────────────────┘
              ┌──────────────────────────────────┐
              │ Pact = PLUS SIDE PEAK CURRENT VALUE│  A11
              │      DURING MOLD CLAMPING          │
              └──────────────────────────────────┘
              ┌──────────────────────────────────┐
              │    FINISH A MOLDING CYCLE          │  A12
              └──────────────────────────────────┘

        A13        < s = S? >              No ──────►
                       Yes

              ┌──────────────────────────────────┐
              │ AMOUNT OF CHANGE IN PEAK CURRENT   │  A14
              │        VALUE Pdiff = Pact-Pave     │
              └──────────────────────────────────┘
              ┌──────────────────────────────────┐
              │ AMOUNT OF CHANGE IN MOLD CLAMPING  │  A15
              │        FORCE Fdiff = Pdiff×K       │
              └──────────────────────────────────┘
              ┌──────────────────────────────────┐
              │ REAR PLATEN POSITION ADJUSTMENT    │  A16
              │        AMOUNT Tadj = Fdiff×F       │
              └──────────────────────────────────┘

     Yes ◄──────  < Ta ≤ Tadj >              A17
                       No
   A26                ┌──────────────────────────────────┐
 ┌───────────┐       │ REAR PLATEN POSITION ADJUSTMENT    │  A18
 │ABNORMALITY│       │ ACCUMULATED VALUE Tu = ΣTadj       │
 │PROCESSING │       └──────────────────────────────────┘
 └───────────┘

              No ◄──────  < -Tr≦Tu≦+Tr >         A19
   A27                        Yes
 ┌───────────┐
 │ABNORMALITY│
 │PROCESSING │
 └───────────┘
        No ◄──────  < Tadj>0 >              A20
                       Yes
 A24  ┌────────────────┐    ┌────────────────┐  A21
      │ Tadjt=|Tadj|×Q │    │ Tadjt=|Tadj|×Q │
      └────────────────┘    └────────────────┘
 A25  ┌────────────────┐    ┌────────────────┐  A22
      │ADVANCE REAR     │    │RETREAT REAR     │
      │PLATEN Tadjt     │    │PLATEN Tadjt     │
      │SECONDS          │    │SECONDS          │
      └────────────────┘    └────────────────┘

              ┌──────────────────────┐
              │       s = 0          │  A23
              └──────────────────────┘
```

14

FIG. 6

EP 1 405 709 A1

MOLD TEMPERATURE AND MOLD CLAMPING FORCE

FIG. 7

EP 1 405 709 A1

16

EP 1 405 709 A1

## EUROPEAN SEARCH REPORT

Application Number

EP 03 25 6182

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 3 642 405 A (EGGENBERGER ULRICH ET AL) 15 February 1972 (1972-02-15) * column 1, line 6 - column 5, line 27 * * column 11, line 71 - column 13, line 18; figures 1,5 * | 1-13 | B29C45/76 |
| A | EP 1 175 989 A (FANUC LTD) 30 January 2002 (2002-01-30) * paragraph [0001] - paragraph [0018] * * paragraph [0060] - paragraph [0065]; claims 14-18; figures 1-9 * | 1-13 | |
| A | PATENT ABSTRACTS OF JAPAN vol. 0102, no. 38 (M-508), 16 August 1986 (1986-08-16) -& JP 61 071164 A (FANUC LTD), 12 April 1986 (1986-04-12) * abstract * | 1-13 | |

TECHNICAL FIELDS
SEARCHED (Int.Cl.7)

B29C

The present search report has been drawn up for all claims

| Place of search | Date of completion of the search | Examiner |
|---|---|---|
| Munich | 17 December 2003 | Lanz, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

17

**EP 1 405 709 A1**

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2003

| Patent document cited in search report | | Publication date | Patent family member(s) | | Publication date |
|---|---|---|---|---|---|
| US 3642405 | A | 15-02-1972 | CH | 491739 A | 15-06-1970 |
| | | | AT | 309225 B | 15-06-1973 |
| | | | AT | 305035 B | 12-02-1973 |
| | | | BE | 732761 A | 10-11-1969 |
| | | | DE | 1923813 A1 | 29-01-1970 |
| | | | FR | 2008183 A5 | 16-01-1970 |
| | | | GB | 1269366 A | 06-04-1972 |
| | | | JP | 50002370 B | 25-01-1975 |
| | | | SE | 374875 B | 24-03-1975 |
| | | | US | 3819774 A | 25-06-1974 |
| EP 1175989 | A | 30-01-2002 | JP | 2002036321 A | 05-02-2002 |
| | | | EP | 1175989 A2 | 30-01-2002 |
| | | | US | 2002015749 A1 | 07-02-2002 |
| JP 61071164 | A | 12-04-1986 | JP | 1940665 C | 09-06-1995 |
| | | | JP | 3050617 B | 02-08-1991 |
| | | | WO | 8601769 A1 | 27-03-1986 |